# DEMANDE DE BREVET EUROPEEN

(11) **EP 2 011 805 A2**
(43) Date de publication de la demande: **07.01.2009**
(21) Numéro de dépôt: 08166824.6
(22) Date de dépôt: 04.10.2002
(51) Int. Cl.: C08F 20/58

(54) **Polymère de tris(hydroxméthyl) acrylamidométhane, utilisation desdits polymères**

(30) Priorité: 17.10.2001 FR 0113361
(62) Demande divisionnaire de: 02793157.5
(71) Demandeur: Société d'Exploitation de Produits pour les Industries Chimiques SEPPIC, 75007 Paris (FR)
(72) Inventeur: BRAUN, Olivier, 81100 CASTRES (FR); MALLO, Paul, 78290 CROISSY-SUR-SEINE (FR); TABACCHI, Guy, 75012 PARIS (FR); PUCCI, Bernard, 13940 MOLLEGES (FR)
(74) Mandataire: Conan, Philippe Claude

(57) **Abrégé**

Polymère réticulé, caractérisé en ce qu'il est susceptible d'être obtenu, soit par homopolymérisation du N-[2-hydroxy-1,1-bis(hydroxyméthyl)-éthyl]-propénamide, soit par copolymérisation du N-[2-hydroxy-1,1-bis(hydroxyméthyl)-éthyl]-propénamide avec un ou plusieurs monomères choisis parmi les monomères cationiques, les monomères comportant au moins une fonction acide fort, partiellement salifiée ou totalement salifiée, les monomères comportant au moins une fonction acide faible, partiellement salifiée ou totalement salifiée ou les monomères neutres. Utilisations comme épaississant de compositions cosmétiques ou pharmaceutiques, comme épaississant de pâtes d'impression pour l'industrie textile, comme épaississant de détergents industriels ou ménagers, comme additif pour la récupération assistée du pétrole, comme modificateur de rhéologie pour les boues de forage ou comme floculant pour le traitement des eaux.

## Description

La présente demande de brevet concerne de nouveaux polymères, et leur utilisation comme agent épaississant floculant, super-absorbant ou modificateur de rhéologie.

A l'occasion de recherches sur la mise au point de nouveaux agents épaississants floculants ou super absorbants ayant une stabilité prolongée dans le temps, la demanderesse s'est intéressée aux polymères du N-[2-hydroxy 1,1-bis(hydroxyméthyl) éthyl] propénamide, dénommé aussi tris(hydroxyméthyl) acrylamidométhane ou THAM :

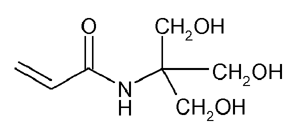

Le THAM est décrit dans la demande de brevet européen publiée sous le numéro EP 0 900 786.

Selon un premier aspect de la présente invention, celle-ci a pour objet un polymère réticulé, caractérisé en ce qu'il est susceptible d'être obtenu soit, par homopolymérisation du N-[2-hydroxy-1,1-bis(hydroxyméthyl)-éthyl]-propénamide, soit par copolymérisation du N-[2-hydroxy-1,1-bis(hydroxyméthyl)-éthyl]-propénamide avec un ou plusieurs monomères choisis parmi les monomères cationiques, les monomères comportant au moins une fonction acide fort, partiellement salifiée ou totalement salifiée, les monomères comportant au moins une fonction acide faible, partiellement salifiée ou totalement salifiée ou les monomères neutres.

Par polymère réticulé, on désigne un polymère non linéaire se présentant à l'état de réseau tridimensionnel insoluble dans l'eau, mais gonflable dans l'eau et conduisant donc à l'obtention d'un gel chimique.

Par salifiée, on désigne pour les fonctions acides forts ou faibles, les sels de métaux alcalins tels, que le sel de sodium, le sel de potassium ou les sels de base azotée, tels que par exemple le sel d'ammonium ou le sel de monoéthanolamine (HO-CH₂-CH₂-NH₃⁺).

Par copolymérisation, on signifie que la réaction de polymérisation met en oeuvre au moins deux monomères différents. Elle peut notamment mettre en oeuvre trois ou plus de trois monomères différents.

Lorsque la réaction de polymérisation conduisant au copolymère objet de la présente invention, met en oeuvre un ou plusieurs monomères comportant une fonction acide fort, il s'agit généralement de la fonction acide sulfonique ou de la fonction acide phosphonique lesdites fonctions étant partiellement ou totalement salifiées. Ledit monomère peut être par exemple l'acide styrènesulfonique, le méthacrylate de (2-sulfo éthyle), l'acide styrènephosphonique, partiellement ou totalement salifiée ou de préférence l'acide 2-méthyl 2-[(1-oxo 2-propènyl) amino] 1-propanesulfonique partiellement ou totalement salifiée sous forme d'un sel de métal alcalin tel que par exemple, le sel de sodium ou le sel de potassium, de sel d'ammonium, d'un sel d'un amino alcool tel que par exemple le sel de monoéthanolamine ou d'un sel d'aminoacide tel que, par exemple, le sel de lysine.

Lorsque la réaction de polymérisation conduisant au copolymère objet de la présente invention met en oeuvre un ou plusieurs monomères comportant une fonction acide faible, il s'agit généralement de la fonction acide carboxylique ; lesdits monomères sont plus particulièrement choisis parmi l'acide acrylique, l'acide méthacrylique, l'acide itaconique, l'acide maléique partiellement ou totalement salifié ou l'acide 3-méthyl 3-[(1-oxo 2-propènyl) amino] butanoïque, partiellement salifié ou totalement salifié.

Lorsque la réaction de polymérisation conduisant au copolymère objet de la présente invention met en oeuvre un ou plusieurs monomères neutres, ils sont plus particulièrement choisis parmi l'acrylamide, le méthacrylamide, le vinylpyrrolidone, le diacétoneacrylamide, l'acrylate de (2-hydroxy éthyle), l'acrylate de (2,3-dihydroxy propyle), le méthacrylate de (2-hydroxy éthyle), le méthacrylate de (2,3-dihydroxy propyle) ou un dérivé éthoxylé de poids moléculaire compris entre 400 et 1000, de chacun de ces esters.

Lorsque la réaction de polymérisation conduisant au copolymère objet de la présente invention met en oeuvre un ou plusieurs monomères cationiques, il s'agit plus particulièrement de monomères comportant un ou plusieurs groupes ammonium ou des précurseurs aminés de ces monomères, comme par exemple, le chlorure de 2,N,N,N-tétraméthyl 2-[(1-oxo 2-propènyl) amino] propanammonium (AMPTAC), le chlorure de 2,N,N-triméthyl 2-[(1-oxo 2-propènyl) amino] propanammonium, le chlorure de N,N,N-triméthyl 3-[(1-oxo 2-propènyl) amino] propanammonium (APTAC), le chlorure de diallyl diméthylammonium (DADMAC), le chlorure de N,N,N-triméthyl 2-[(1-oxo 2-propènyl)] éthanammonium, le chlorure de N,N,N-triméthyl 2-[(1-oxo 2- méthyl 2-propènyl)] éthanammonium, le N-[2-(diméthylamino) 1,1-diméthyl] acrylamide, le N-[2-(méthylamino) 1,1-diméthyl] acrylamide, l'acrylate de 2-(diméthylamino) éthyle, le méthacrylate de 2-(diméthylamino) éthyle ou le N-[3-(diméthylamino) propyl] acrylamide.

L'invention a plus particulièrement pour objet, les polymères suivants :
- les homopolymères réticulés de THAM,
- les copolymères réticulés de THAM et d'acide 2-méthyl 2-[(1-oxo 2-propènyl) amino] 1-propanesulfonique partiellement ou totalement salifié sous forme de sel de sodium ou de sel d'ammonium,
- les copolymères réticulés de THAM et d'acide acrylique partiellement salifié sous forme de sel de sodium ou de sel d'ammonium,
- les copolymères réticulés de THAM et d'acide méthacrylique partiellement salifié sous forme de sel de sodium ou de sel d'ammonium,
- les terpolymères réticulés de THAM, d'acide acrylique et d'acrylamide partiellement salifié sous forme de sel de sodium ou de sel d'ammonium,
- les copolymères réticulés de THAM et d'acide 2-méthyl 2-[(1-oxo 2-propènyl) amino] 1-propanesulfonique partiellement ou totalement salifié sous forme de sel de sodium ou de sel d'ammonium,
- les copolymères réticulés de THAM et d'AMPTAC,
- les copolymères réticulés de THAM et d'APTAC,
- les copolymères réticulés de THAM et de DADMAC,
- les copolymères réticulés de THAM et d'acrylate de 2-(diméthylamino) éthyle,
- les copolymères réticulés de THAM et de méthacrylate de 2-(diméthylamino) éthyle,
- les terpolymères réticulés de THAM, et d'AMPTAC et d'acrylamide,
- les terpolymères réticulés de THAM, et d'AMPTAC et de diacétoneacrylamide,
- les terpolymères réticulés de THAM, d'APTAC et d'acrylamide,
- les terpolymères réticulés de THAM, de DADMAC et de diacétoneacrylamide,
- les terpolymères réticulés de THAM, d'acrylate de 2-(diméthylamino) éthyle et d'acrylamide, ou
- les terpolymères réticulés de THAM, de méthacrylate de 2-(diméthylamino) éthyle et de diacétoneacrylamide.

Selon un aspect particulier de la présente invention, les polymères réticulés tels que définis précédemment sont des polymères réticulés par un agent de réticulation choisi parmi les composés diéthyléniques ou polyéthyléniques, et tout particulièrement parmi l'acide diallyloxyacétique ou un des sels et notamment son sel de sodium, le triallylamine, le triméthylol propanetriacrylate, le diméthacrylate d'éthylèneglycol, le diacrylate de diéthylène glycol, le diallylurée ou le méthylène bis(acrylamide). L'agent de réticulation est généralement utilisé dans la proportion molaire exprimée par rapport aux monomères mis en oeuvre, de 0,005 % à 1 %, notamment de 0,01 % à 0,2 % et plus particulièrement de 0,01 % à 0,1 %.

Les polymères réticulés tels que définis précédemment, ont une proportion molaire, exprimée par rapport aux monomères mis en oeuvre, en monomère THAM généralement supérieure ou égale à 5 %, plus particulièrement supérieure ou égale à 10 % et tout particulièrement supérieure ou égale à 20 %.

Le polymère réticulé tel que défini précédemment, peut être isolé d'un latex inverse ou d'un microlatex inverse précédent, par les différents procédés connus de l'homme du métier, comme la technique de précipitation qui consiste à couler le latex ou le microlatex dans un large excès de solvant tel que l'acétone, l'isopropanol ou l'éthanol, ou comme la technique de séchage par aspersion, dite de "Spray drying", qui est décrite dans la publication internationale WO 00/01757.

Le polymère objet de la présente invention peut être mis en oeuvre, par exemple, comme épaississant de compositions cosmétiques ou pharmaceutiques, comme épaississant de pâtes d'impression pour l'industrie textile, comme épaississant de détergents industriels ou ménagers, comme additif pour la récupération assistée du pétrole, comme modificateur de rhéologie pour les boues de forage ou encore comme floculant pour le traitement des eaux.

## Revendications

1. Polymère réticulé, **caractérisé en ce qu'**il est susceptible d'être obtenu, soit par homopolymérisation du N-[2-hydroxy-1,1-bis(hydroxyméthyl)-éthyl]-propénamide, soit par copolymérisation du N-[2-hydroxy-1,1-bis(hydroxyméthyl)-éthyl]-propénamide avec un ou plusieurs monomères choisis parmi les monomères cationiques, les monomères comportant au moins une fonction acide fort, partiellement salifiée ou totalement salifiée, les monomères comportant au moins une fonction acide faible, partiellement salifiée ou totalement salifiée ou les monomères neutres.

2. Polymère réticulé tel que défini à la revendication 1, pour lequel le monomère comportant une fonction acide fort est choisi parmi l'acide styrènesulfonique, le méthacrylate de (2-sulfo éthyle), l'acide styrènephosphonique, partiellement ou totalement salifiée ou de préférence l'acide 2-méthyl-2-[(1-oxo 2-propènyl) amino]-1-propanesulfonique partiellement ou totalement salifiée sous forme d'un sel de métal alcalin, de sel d'ammonium, d'un sel d'un amino alcool ou d'un sel d'amino acide.

3. Polymère réticulé tel que défini à l'une quelconque des revendications 1 ou 2, pour lequel le monomère comportant une fonction acide faible est choisi parmi l'acide acrylique, l'acide méthacrylique, l'acide itaconique, l'acide maléique partiellement ou totalement salifié ou l'acide 3-méthyl 3-[(1-oxo 2-propènyl) amino] butanoïque, partiellement salifié ou totalement salifié.

4. Polymère réticulé tel que défini à l'une quelconque des revendications 1 à 3, pour lequel le monomère neutre est choisi parmi l'acrylamide, le méthacrylamide, le vinylpyrrolidone, le diacétoneacrylamide, l'acrylate de (2-hydroxy éthyle), l'acrylate de (2,3-dihydroxy propyle), le méthacrylate de (2-hydroxy éthyle), le méthacrylate de (2,3-dihydroxy propyle), ou un dérivé éthoxylé de poids moléculaire compris entre 400 et 1000, de chacun de ces esters.

5. Polymère réticulé tel que défini à l'une quelconque des revendications 1 à 4, pour lequel le monomère cationique est choisi parmi le chlorure de 2,N,N,N-tétraméthyl 2-[(1-oxo 2-propènyl) amino] propanammonium (AMPTAC), le chlorure de 2,N,N-triméthyl 2-[(1-oxo 2-propènyl) amino] propanammonium, le chlorure de N,N,N-triméthyl 3-[(1-oxo 2-propènyl) amino] propanammonium (APTAC), le chlorure de diallyl diméthylammonium (DADMAC), le chlorure de N,N,N-triméthyl 2-[(1-oxo 2-propènyl)] éthanammonium, le chlorure de N,N,N-triméthyl 2-[(1-oxo 2- méthyl 2-propènyl)] éthanammonium, le N-[2-(diméthylamino) 1,1-diméthyl] acrylamide, le N-[2-(méthylamino) 1,1-diméthyl] acrylamide, l'acrylate de 2-(diméthylamino) éthyle, le méthacrylate de 2-(diméthylamino) éthyle ou le N-[3-(diméthylamino) propyl] acrylamide.

6. Polymère réticulé tel que défini à l'une des revendications 1 à 5, pour lequel le polymère est choisi parmi les polymères suivants :
- les homopolymères réticulés de THAM,
- les copolymères réticulés de THAM et d'acide 2-méthyl 2-[(1-oxo 2-propènyl) amino] 1-propanesulfonique partiellement ou totalement salifié sous forme de sel de sodium ou de sel d'ammonium,
- les copolymères réticulés de THAM et d'acide acrylique partiellement salifié sous forme de sel de sodium ou de sel d'ammonium,
- les copolymères réticulés de THAM et d'acide méthacrylique partiellement salifié sous forme de sel de sodium ou de sel d'ammonium,
- les terpolymères réticulés de THAM, d'acide acrylique et d'acrylamide partiellement salifié sous forme de sel de sodium ou de sel d'ammonium,
- les copolymères réticulés de THAM et d'acide 2-méthyl 2-[(1-oxo 2-propènyl) amino] 1-propanesulfonique partiellement ou totalement salifié sous forme de sel de sodium ou de sel d'ammonium,
- les copolymères réticulés de THAM et d'AMPTAC,
- les copolymères réticulés de THAM et d'APTAC,
- les copolymères réticulés de THAM et de DADMAC,
- les copolymères réticulés de THAM et d'acrylate de 2-(diméthylamino) éthyle,
- les copolymères réticulés de THAM et de méthacrylate de 2-(diméthylamino) éthyle,
- les terpolymères réticulés de THAM, d'AMPTAC et d'acrylamide,
- les terpolymères réticulés de THAM, d'AMPTAC et de diacétoneacrylamide,
- les terpolymères réticulés de THAM, d'APTAC et d'acrylamide,
- les terpolymères réticulés de THAM, de DADMAC et de diacétoneacrylamide,
- les terpolymères réticulés de THAM, d'acrylate de 2-(diméthylamino) éthyle et d'acrylamide, ou
- les terpolymères réticulés de THAM, de méthacrylate de 2-(diméthylamino) éthyle et de diacétoneacrylamide.

7. Polymère réticulé tel que défini à l'une quelconque des revendications 1 à 6, par un agent de réticulation choisi parmi les composés diéthyléniques ou polyéthyléniques, et tout particulièrement parmi l'acide diallyloxyacétique ou un des sels et notamment son sel de sodium, le triallylamine, le triméthylol propanetriacrylate, le diméthacrylate d'éthylèneglycol, le diacrylate de diéthylène glycol, le diallylurée ou le méthylène bis(acrylamide).

8. Polymère réticulé tel que défini à l'une quelconque des revendications 1 à 7, dans lequel la proportion molaire, exprimée par rapport aux monomères mis en oeuvre, en monomère THAM est supérieure ou égale à 5 %, plus particulièrement supérieure ou égale à 10 % et tout particulièrement supérieure ou égale à 20 %.

9. Utilisation du polymère réticulé tel que défini à l'une quelconque des revendications 1 à 8, comme épaississant de compositions cosmétiques ou pharmaceutiques, comme épaississant de pâtes d'impression pour l'industrie textile, comme épaississant de détergents industriels ou ménagers, comme additif pour la récupération assistée du pétrole, comme modificateur de rhéologie pour les boues de forage ou comme floculant pour le traitement des eaux.
